# EUROPÄISCHE PATENTSCHRIFT

(11) **EP 1 496 175 B1**
(45) Veröffentlichungstag und Bekanntmachung des Hinweises auf die Patenterteilung: **30.08.2006**
(21) Anmeldenummer: 04014221.8
(22) Anmeldetag: 17.06.2004
(51) Int. Cl.: E05B 19/00

(54) **Schlüsselsystem für ein Kraftfahrzeug**
Key system for a motor vehicle
Système de clef pour un véhicule automobile

(30) Priorität: 09.07.2003 DE 10331087
(43) Veröffentlichungstag der Anmeldung: 12.01.2005
(73) Patentinhaber: Hella KGaA Hueck & Co., 59552 Lippstadt (DE); Volkswagen Aktiengesellschaft, 38436 Wolfsburg (DE)
(72) Erfinder: Frohne, Hans-Joachim, 38165 Lehre (DE); Borngräber, Ralf, Dr., 38440 Wolfsburg (DE); Grave, Dietmar, 38116 Braunschweig (DE); Wick, Christian, 38118 Braunschweig (DE); Meyer, Dieter, 38442 Wolfsburg (DE); Plott, Peter, 38448 Wolfsburg (DE); Klüner, Peter, Dr., 59555 Lippstadt (DE); Reimann, Martin, 59071 Hamm (DE); Mertens, Gerd, 33154 Salkotten (DE); Hoener, Joachim, 33102 Paderborn (DE); Oebbeke, Dirk, 33098 Paderborn (DE); Hofmann, Gustav, 38114 Braunschweig (DE); Balko, Peter, 38118 Braunschweig (DE)

(56) Entgegenhaltungen:
- EP-A- 1 283 315
- DE-A- 4 444 913
- DE-A- 19 605 201
- US-A- 5 440 910

## Beschreibung

Die Erfindung betrifft ein Schlüsselsystem für ein Kraftfahrzeug mit einer in einem Gehäuse angeordneten Sendeelektronik zum berührungslosen Ver- und/oder Entriegeln einer Tür des Kraftfahrzeuges und/oder zum Betrieb des Kraftfahrzeuges sowie mit einem Notschlüssel zum mechanisch erfolgenden Ver- und/oder Entriegeln der Tür des Kraftfahrzeuges und/oder zum Betrieb des Kraftfahrzeuges.

Derartige Schlüsselsysteme sind zum Beispiel aus Dokument DE-A-4444913 bekannt.

Es ist Aufgabe der Erfindung, ein derartiges Schlüsselsystem zu verbessern.

Vorgenannte Aufgabe wird durch ein Schlüsselsystem für ein Kraftfahrzeug mit einer in einem Gehäuse angeordneten Sendeelektronik zum berührungslosen Ver- und/oder Entriegeln einer Tür des Kraftfahrzeuges und/oder zum Betrieb des Kraftfahrzeuges sowie einem Notschlüssel zum mechanisch erfolgenden Ver- und/oder Entriegeln der Tür des Kraftfahrzeuges und/oder zum Betrieb des Kraftfahrzeuges gelöst, wobei der Notschlüssel zumindest eine erste Einkerbung, mittels der der Notschlüssel in einer ersten Rastposition in dem Gehäuse arretierbar ist, und eine zweite Einkerbung aufweist, mittels der der Notschlüssel in einer von der ersten Rastposition verschiedenen zweiten Rastposition in dem Gehäuse arretierbar ist, wobei das Gehäuse einen sowohl mit der ersten Einkerbung als auch mit der zweiten Einkerbung des Notschlüssels zusammenwirkenden Rastmechanismus zum Arretieren des Notschlüssels in der ersten und in der zweiten Rastposition aufweist.

Statt einer Einkerbung sind auch andere mechanisch gleichwirkende Geometrien, wie etwa Ausbuchtungen, möglich, die als Einkerbungen im Sinne der Erfindung verstanden werden können. Durch eine Einkerbung wird ein Gegenpart zu dem Rastmechanismus erzielt, der gegenüber einer Ausbuchtung einen geringeren Aufwand beim mechanischen Arretieren des Notschlüssels erfordert. In einer vorteilhaften Ausgestaltung kann vorgesehen sein, dass eine Öffnung zum Einfädeln eines Schlüsselringes durch einen Rastmechanismus als Einkerbung zum Arretieren des Notschlüssels, insbesondere in der ersten Rastposition, nutzbar ist.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt. Eine Tür (eines Kraftfahrzeuges) im Sinne der Erfindung kann insbesondere eine Tür, eine Heck- oder Frontklappe oder ein Kofferraumdeckel sein. Ein zum mechanisch erfolgenden Betrieb des Kraftfahrzeuges ausgebildeter Notschlüssel in Sinne der Erfindung entspricht insbesondere einem mechanischen Schlüssel.

In vorteilhafter Ausgestaltung der Erfindung weist der Rastmechanismus eine Arretierkugel auf, die zum Arretieren des Notschlüssels in der ersten Rastposition, insbesondere mittels einer Feder, in die erste Einkerbung drückbar ist. In weiterhin vorteilhafter Ausgestaltung der Erfindung ist die Arretierkugel zum Arretieren des Notschlüssels in der zweiten Rastposition, insbesondere mittels einer Feder, in die zweite Einkerbung drückbar.

In weiterhin vorteilhafter Ausgestaltung der Erfindung weist der Rastmechanismus einen Arretierstift auf, der zum Arretieren des Notschlüssels in der ersten Rastposition, insbesondere mittels einer Feder, in die erste Einkerbung drückbar ist. Der Arretierstift ist in weiterhin vorteilhafter Ausgestaltung der Erfindung zum Arretieren des Notschlüssels in der zweiten Rastposition, insbesondere mittels einer Feder, in die zweite Einkerbung drückbar.

In weiterhin vorteilhafter Ausgestaltung der Erfindung weist der Rastmechanismus einen Rasthaken auf, der zum Arretieren des Notschlüssels in der ersten Rastposition, insbesondere mittels eines elastischen Elementes, wie z.B. eines sogenannten ,Knackfrosches', in die erste Einkerbung drückbar ist. In weiterhin vorteilhafter Ausgestaltung der Erfindung ist der Rasthaken zum Arretieren des Notschlüssels in der zweiten Rastposition, insbesondere mittels des elastischen Elementes, in die zweite Einkerbung drückbar. In weiterhin vorteilhafter Ausgestaltung der Erfindung ist der Rasthaken durch Druck auf das elastische Element aus der ersten Einkerbung und durch Druck auf das elastische Element aus der zweiten Einkerbung drückbar.

In weiterhin vorteilhafter Ausgestaltung der Erfindung weist der Rastmechanismus eine Rastung auf, die zum Arretieren des Notschlüssels in der ersten Rastposition in die erste Einkerbung drückbar ist, wobei die erste Einkerbung als Öffnung zur Aufnahme eines Schlüsselringes ausgestaltet ist. In weiterhin vorteilhafter Ausgestaltung der Erfindung ist die Rastung zum Arretieren des Notschlüssels in der zweiten Rastposition in die zweite Einkerbung drückbar.

In weiterhin vorteilhafter Ausgestaltung der Erfindung weist das Schlüsselsystem zumindest ein federndes Element, insbesondere eine Spiralfeder oder ein Kunststoffstück, auf, mittels dem der Notschlüssel zumindest z.T. aus dem Gehäuse schiebbar ist, wenn sich der Rastmechanismus in einer gelösten Stellung befindet. In einer Ausbildung als Kunststoffstück kann das federnde Element im wesentlichen aus Kunststoff, z.B. Silikon, bestehen. Das federnde Element ist vorteilhafterweise in dem Gehäuse angeordnet.

In weiterhin vorteilhafter Ausgestaltung der Erfindung ist der Notschlüssel mittels des federnden Elementes von der ersten Rastposition in die zweite Rastposition schiebbar, wenn sich der Rastmechanismus in einer gelösten Stellung befindet, wobei das federnde Element in weiterhin vorteilhafter Ausgestaltung der Erfindung durch Einschieben des Notschlüssels in das Gehäuse spannbar ist.

Das Gehäuse hat vorteilhafterweise eine Bauhöhe von weniger als 20mm, insbesondere von weniger als 18mm. Es kann vorgesehen sein, dass zudem die Bauhöhe an einer Stirnseite des Gehäuses um in etwa 5mm geringer ist als die Bauhöhe der gegenüberliegenden Stirnseite des Gehäuses.

Vorgenannte Aufgabe wird zudem - insbesondere in Verbindung mit vorgenannten vorteilhaften Ausgestaltungen - durch ein Schlüsselsystem für ein Kraftfahrzeug mit einer in einem Gehäuse angeordneten Sendeelektronik zum berührungslosen Ver- und/oder Entriegeln einer Tür des Kraftfahrzeuges und/oder zum Betrieb des Kraftfahrzeuges sowie mit einem Notschlüssel zum mechanisch erfolgenden Ver- und/oder Entriegeln der Tür des Kraftfahrzeuges und/oder zum Betrieb des Kraftfahrzeuges gelöst, wobei das Gehäuse einen Rastmechanismus zum Arretieren des Notschlüssels in einer ersten Rastposition und in einer von der ersten Rastposition verschiedenen zweiten Rastposition sowie ein federndes Element aufweist, mittels dessen der Notschlüssel von der ersten Rastposition in die zweite Rastposition schiebbar ist, wenn sich der Rastmechanismus in einer gelösten Stellung befindet.

Weitere Vorteile und Einzelheiten ergeben sich aus der nachfolgenden Beschreibung von Ausführungsbeispielen. Dabei zeigen:
- Fig. 1: ein Ausführungsbeispiel eines Schlüsselsystems in einer ersten Arretierposition in dreidimensionaler Darstellung,
- Fig. 2: ein Ausführungsbeispiel eines Notschlüssels,
- Fig. 3: ein weiteres Ausführungsbeispiel eines Notschlüssels,
- Fig. 4: das Ausführungsbeispiel des Schlüsselsystems gemäß Fig. 1 in aufgeschnittener dreidimensionaler Darstellung,
- Fig. 5: das Ausführungsbeispiel des Schlüsselsystems gemäß Fig. 1 in einer zweiten Arretierposition in dreidimensionaler Darstellung von unten gesehen,
- Fig. 6: einen Ausschnitt einer aufgeschnittenen Darstellung des Ausführungsbeispiels des Schlüsselsystems gemäß Fig. 1 in der ersten Arretierposition,
- Fig. 7: einen Ausschnitt einer aufgeschnittenen Darstellung des Ausführungsbeispiels des Schlüsselsystems gemäß Fig. 1 in einer Position zwischen der ersten Arretierposition und der zweiten Arretierposition,
- Fig. 8: einen Ausschnitt einer aufgeschnittenen Darstellung des Ausführungsbeispiels des Schlüsselsystems gemäß Fig. 1 in der zweiten Arretierposition,
- Fig. 9: einen Ausschnitt einer aufgeschnittenen Darstellung eines weiteren Ausführungsbeispiels eines Schlüsselsystems in einer ersten Arretierposition,
- Fig. 10: einen Ausschnitt einer aufgeschnittenen Darstellung des Ausführungsbeispiels des Schlüsselsystems gemäß Fig. 9 in einer Position zwischen der ersten Arretierposition und einer zweiten Arretierposition,
- Fig. 11: einen Ausschnitt einer aufgeschnittenen Darstellung des Ausführungsbeispiels des Schlüsselsystems gemäß Fig. 9 in der zweiten Arretierposition,
- Fig. 12: einen Ausschnitt einer aufgeschnittenen Darstellung des Ausführungsbeispiels des Schlüsselsystems gemäß Fig. 9 nach Lösen der zweiten Arretierposition,
- Fig. 13: ein Ausführungsbeispiel eines Schlüsselsystems mit Knackfrosch-Mechanik in aufgeschnittener dreidimensionaler Darstellung,
- Fig. 14: ein elastisches Element in dreidimensionaler Darstellung von unten betrachtet,
- Fig. 15: ein weiteres Ausführungsbeispiel eines Schlüsselsystems in einer zweiten Arretierposition in dreidimensionaler Darstellung,
- Fig. 16: einen Notschlüssel des Schlüsselsystems gemäß Fig. 15,
- Fig. 17: einen Querschnitt des Ausführungsbeispiels des Schlüsselsystems gemäß Fig. 15 in einer ersten Arretierposition in dreidimensionaler Darstellung,

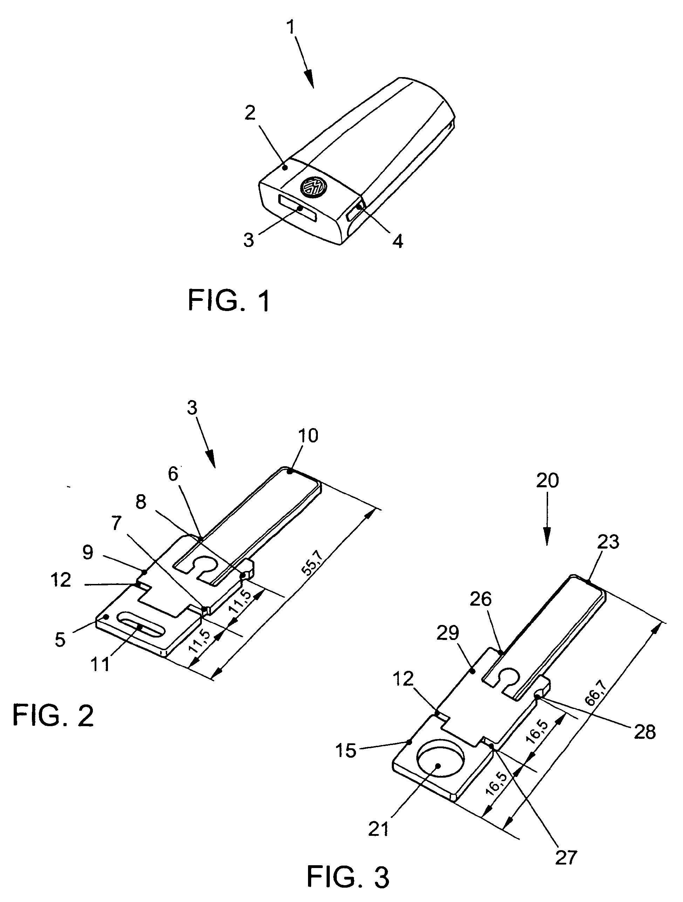

Fig. 1 zeigt ein Ausführungsbeispiel für ein sich in einer ersten Arretierposition befindendes Schlüsselsystem 1 für ein Kraftfahrzeug. Das Schlüsselsystem 1 weist eine in einem Gehäuse 2 angeordnete Sendeelektronik zum berührungslosen Ver- und/oder Entriegeln einer Tür des Kraftfahrzeuges und/oder zum Betrieb des Kraftfahrzeuges sowie einen Notschlüssel 3 zum mechanisch erfolgenden Ver- und/oder Entriegeln der Tür des Kraftfahrzeuges und/oder zum Betrieb des Kraftfahrzeuges auf. Seitlich am Gehäuse 2 ist zudem ein Schubelement 4 vorgesehen.

Fig. 2 zeigt den Notschlüssel 3 in dreidimensionaler Darstellung. Der Notschlüssel 3 weist einen Schließkörper 6 und einen zur Aufnahme eines Schlüsselringes geeigneten Aufnahmekörper 5 mit einer ovalen Öffnung 11 auf. Der Schließkörper 6 weist ein Schließstück 10 zum mechanisch erfolgenden Ver- und/oder Entriegeln der Tür des Kraftfahrzeuges und/oder zum Betrieb des Kraftfahrzeuges und einen Haltekörper 9 auf, an dem das Schließstück 10 befestigt ist. Der Schließkörper 6 und der Aufnahmekörper 5 sind mittels eines Scharniers 12 kippbar miteinander verbunden. Der Schließkörper 6 weist zudem eine erste Einkerbung 7 und eine zweite Einkerbung 8 auf.

Fig. 3 zeigt ein zum Notschlüssel 3 alternatives Ausführungsbeispiel eines Notschlüssels 20 in dreidimensionaler Darstellung. Der Notschlüssel 20 weist einen Schließkörper 26 und einen zur Aufnahme eines Schlüsselringes geeigneten Aufnahmekörper 25 mit einer im Gegensatz zur Öffnung 11 kreisrunden Öffnung 21 auf. Der Schließkörper 26 weist ein Schließstück 23 zum mechanisch erfolgenden Ver- und/oder Entriegeln der Tür des Kraftfahrzeuges und/oder zum Betrieb des Kraftfahrzeuges und einen Haltekörper 29 auf, an dem das Schließstück 23 befestigt ist. Der Schließkörper 26 und der Aufnahmekörper 25 sind mittels eines Scharniers 22 kippbar miteinander verbunden. Der Schließkörper 26 weist zudem eine erste Einkerbung 27 und eine zweite Einkerbung 28 auf. Fig. 2 und Fig. 3 zeigen zudem beispielhafte Maßangaben in mm.

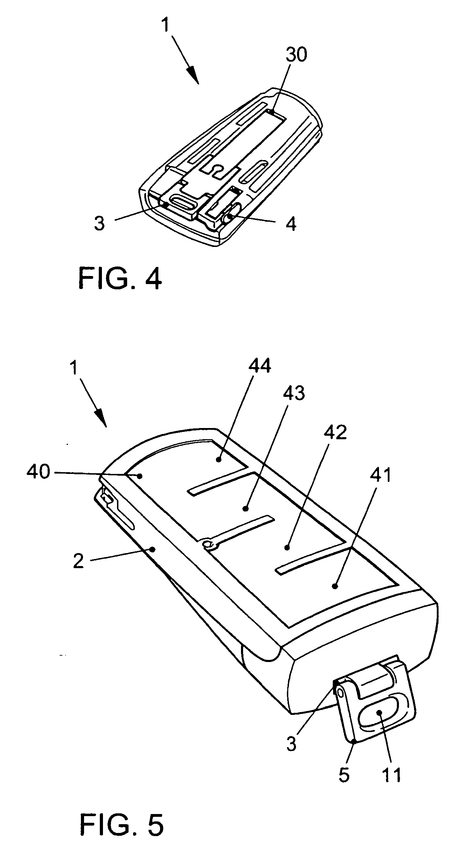

Fig. 4 zeigt das Ausführungsbeispiel des Schlüsselsystems 1 gemäß Fig. 1 in aufgeschnittener dreidimensionaler Darstellung. Der Notschlüssel 3 ist vollständig in einem Innenraum 30 des Gehäuses 2 aufgenommen.

Fig. 5 zeigt das Ausführungsbeispiel des Schlüsselsystems 1 gemäß Fig. 1 in einer zweiten Arretierposition in dreidimensionaler Darstellung von unten gesehen. In der zweiten Arretierposition ist der Schließkörper 6 vollständig in einem Innenraum 30 des Gehäuses 3 untergebracht. Der Aufnahmekörper 5 mit der ovalen Öffnung 11 befindet sich dagegen außerhalb des Gehäuses 2. In der beispielhaften Ausgestaltung befindet sich der Aufnahmekörper 5 gerade soweit außerhalb des Gehäuses 2, dass der Ausnahmekörper 5 kippbar ist.

Das Schlüsselsystem 1 weist einen mäanderförmigen Schaltbereich 40 mit vier Schaltflächen 41, 42, 43 und 44 auf. Mittels der Schaltfläche 41 sind die Türen des Kraftfahrzeuges entriegelbar. Mittels der Schaltfläche 42 ist ein Kofferraum des Kraftfahrzeuges entriegelbar und zu öffnen. Mittels der Schaltfläche 43 sind die Türen und der Kofferraum des Kraftfahrzeuges verriegelbar. Mittels der Schaltfläche 44 kann das Kraftfahrzeug gestartet werden.

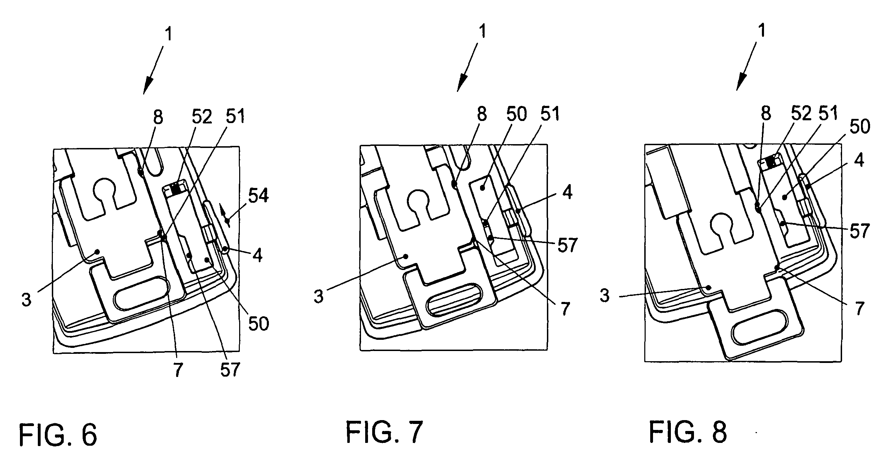

Fig. 6 zeigt einen Ausschnitt einer aufgeschnittenen Darstellung des Ausführungsbeispiels des Schlüsselsystems 1 gemäß Fig. 1 in der ersten Arretierposition. Der in Fig. 6 dargestellte Ausschnitt des Schlüsselsystems 1 zeigt einen mit der Einkerbung 7 des Notschlüssels zusammenwirkenden Rastmechanismus zum Arretieren des Notschlüssels 3 in der ersten Arretierposition. Der Rastmechanismus weist einen mit dem Schubelement 4 verbundenen Arretierkörper 50 mit einer Aussparung 57, eine Arretierkugel 51 und eine Arretierfeder 52 auf. Mittels des Arretierkörpers 50 wird die Arretierkugel 51 in die Einkerbung 7 gedrückt, so dass der Notschlüssel 22 in der ersten Arretierposition fixiert ist. Die Arretierfeder 52 hält den Arretierkörper 50 dabei in dieser Position.

Durch Schieben des Schubelementes 4 in Richtung des Pfeils 54 gerät die Arretierkugel 51 in die Aussparung 57, so dass die Arretierung durch das Zusammenwirken von Arretierkugel 51 und Einkerbung 7 aufgehoben wird. Durch ein nicht dargestelltes federndes Element wird der Notschlüssel 3 z.T. aus dem Gehäuse gedrückt wie dies in Fig. 7 dargestellt ist. Fig. 7 zeigt dabei einen Ausschnitt einer aufgeschnittenen Darstellung des Schlüsselsystems 1 in einer Position zwischen der ersten Arretierposition und der zweiten Arretierposition.

Wird das Schubelement 4 losgelassen, so drückt die Arretierfeder 52 den Arretierkörper 50 zurück in die Ausgangsposition, so dass der Arretierkörper 50 die Arretierkugel 51 in die Einkerbung 8 drückt. Auf diese Weise wird der Notschlüssel 3 - wie in Fig. 8 gezeigt - im Gehäuse 2 in der zweiten Arretierposition arretiert. Durch erneutes Schieben des Schubelementes 4 in Richtung des Pfeils 54 gerät die Arretierkugel 51 erneut in die Aussparung 57, so dass die Arretierung durch das Zusammenwirken von Arretierkugel 51 und Einkerbung 8 aufgehoben wird. In diesem Zustand kann der Notschlüssel 3 aus dem Gehäuse gezogen werden.

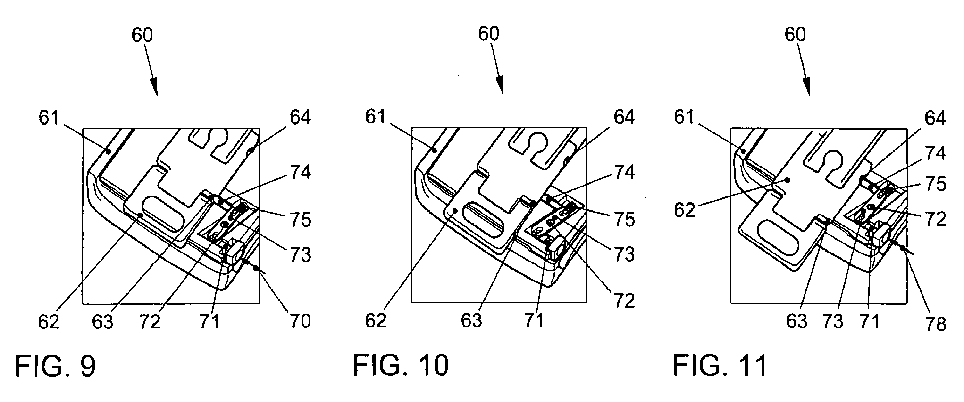

Fig. 9 zeigt einen Ausschnitt einer aufgeschnittenen Darstellung eines weiteren Ausführungsbeispiels eines Schlüsselsystems 60 in einer ersten Arretierposition. Das Schlüsselsystem 60 weist ein Gehäuse 61 auf, in das ein Notschlüssel 62 vollständig hineingeschoben ist. Der Notschlüssel 62 entspricht dem Notschlüssel 3, weist jedoch zwei von den Einkerbungen 7 und 8 verschieden gestaltete Einkerbungen 63 und 64 auf. Das Gehäuse 61 entspricht dem Gehäuse 2, unterscheidet sich jedoch durch seinen Rastmechanismus. Der Rastmechanismus des Gehäuses 61 weist einen Druckstift 71, einen um einen Stift 72 schwenkbaren Arretierhebel 73, einen Arretierstift 74 und eine Feder 75 auf. Der Arretierhebel 73 weist zwei Enden auf, wobei an einem Ende der Druckstift 71 und an dem anderen Ende der Arretierstift 74 beweglich befestigt ist.

Mittels der Feder 75 wird der Arretierstift 74 in die Einkerbung 63 bedrückt, so dass der Notschlüssel 62 in der ersten Arretierposition arretiert ist. Durch Drücken des Druckstiftes 71, wie dies durch den Pfeil 70 angedeutet ist, kann die Kraft der Feder 75 überwunden und der Arretierstift 74 aus der Einkerbung 63 gezogen werden. Durch ein nicht dargestelltes federndes Element wird der Notschlüssel 62 z.T. aus dem Gehäuse gedrückt, wie dies in Fig. 10 dargestellt ist. Fig. 10 zeigt dabei einen Ausschnitt einer aufgeschnittenen Darstellung des Ausführungsbeispiels des Schlüsselsystems 60 gemäß Fig. 9 in einer Position zwischen der ersten Arretierposition und einer zweiten Arretierposition,

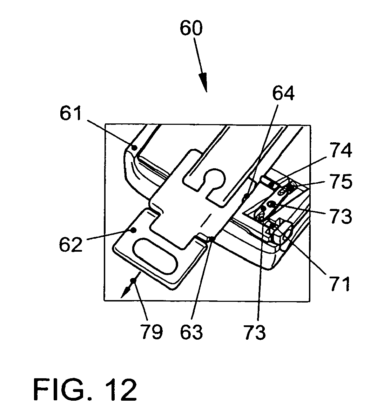

Wird der Druckstift 71 losgelassen, so drückt die Feder 75 den Arretierstift 74 in die Einkerbung 64 und arretiert den Notschlüssel 62 in der zweiten Arretierposition. Fig. 11 zeigt einen entsprechenden Ausschnitt einer aufgeschnittenen Darstellung des Ausführungsbeispiels des Schlüsselsystems 60 in der zweiten Arretierposition. Durch erneutes Drücken des Druckstiftes 71, wie dies durch den Pfeil 78 angedeutet ist, kann die Kraft der Feder 75 überwunden und der Arretierstift 74 aus der Einkerbung 64 gezogen werden. In diesen Zustand kann der Notschlüssel 62 - wie in Fig. 12 gezeigt - in Richtung des Pfeils 79 aus dem Gehäuse 61 gezogen werden. Fig. 12 zeigt entsprechend einen Ausschnitt einer aufgeschnittenen Darstellung des Schlüsselsystems 60 nach Lösen der zweiten Arretierposition.

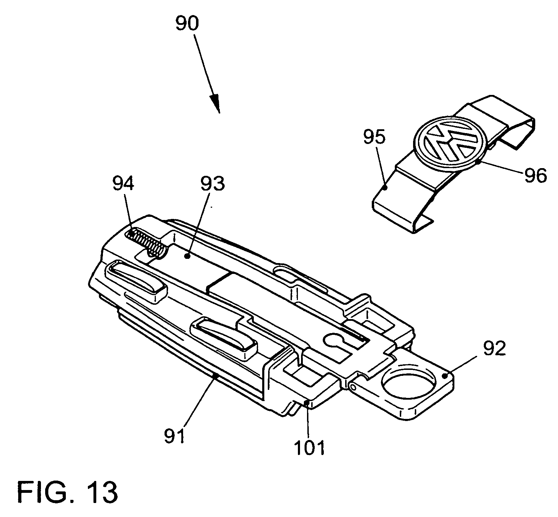

Fig. 13 zeigt ein Ausführungsbeispiel eines Schlüsselsystems 90 für ein Kraftfahrzeug mit einer sogenannten Knackfrosch-Mechanik in einer zweiten Arretierposition in aufgeschnittener dreidimensionaler Darstellung. Das Schlüsselsystem 90 weist eine in einem Gehäuse 91 angeordnete Sendeelektronik zum berührungslosen Ver- und/oder Entriegeln einer Tür des Kraftfahrzeuges und/oder zum Betrieb des Kraftfahrzeuges sowie einen in einem Innenraum 93 des Gehäuses 91 angeordneten Notschlüssel 92 zum mechanisch erfolgenden Ver- und/oder Entriegeln der Tür des Kraftfahrzeuges und/oder zum Betrieb des Kraftfahrzeuges auf.

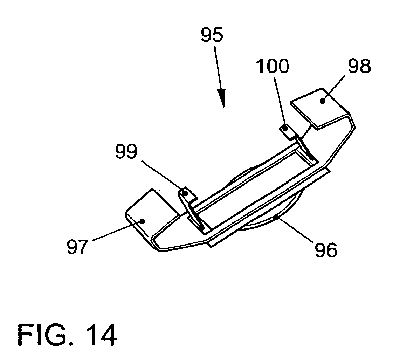

Das Gehäuse 91 weist ein die sogenannte Knackfrosch-Mechanik bildendes elastisches Element 95 mit einem Druckpunkt 96 auf. Das elastische Element 95 ist in Fig. 14 zudem in dreidimensionaler Darstellung von unten betrachtet dargestellt.

Das elastische Element 95 ist in Fig. 13 aus Gründen der Übersichtlichkeit vom Gehäuse 91 getrennt dargestellt. Das elastische Element 95 ist im montierten Zustand jedoch in dem mit Bezugszeichen 101 bezeichneten Bereich angeordnet, den es mit äußeren Klemmen 97, 98 umfasst. Das elastische Element 95 weist zudem Rasthaken 99, 100 auf, mittels derer der Notschlüssel 92 im Gehäuse 91 arretiert wird. Dazu weist der Notschlüssel 92 an seiner Unterseite entsprechende, in Fig. 13 nicht erkennbare Einkerbungen auf.

Der Notschlüssel 92 ist vollständig in den Innenraum 93 des Gehäuses 91 einschiebbar und mittels des elastischen Elementes 95 in dieser ersten Arretierposition arretierbar.

Wird Druck auf den Druckpunkt 96 angeübt, so werden die Rasthaken 99, 100 nach unten gedrückt und geben den Notschlüssel 92 frei. In diesem Zustand wird der Notschlüssel 92 durch ein federndes Element 94, das im vorliegenden Ausführungsbeispiel als Spiralfeder ausgebildet ist, aus dem Gehäuse 91 gedrückt. Wird der Druckpunkt 96 entlastet, kann der Notschlüssel 92 in der in Fig. 13 dargestellten zweiten Arretierposition arretiert werden. Dazu weist der Notschlüssel 92 an seiner Unterseite entsprechende, in Fig. 13 nicht erkennbare, weitere Einkerbungen auf. Wird erneut Druck auf den Druckpunkt 96 angeübt, so werden die Rasthaken 99, 100 wiederum nach unten gedrückt und geben den Notschlüssel 92 frei. In diesem Zustand kann der Notschlüssel 92 aus dem Gehäuse 91 gezogen werden.

Ein dem federnden Element 94 entsprechendes federndes Element kann auch in den Gehäusen 2 bzw. 61 angeordnet werden.

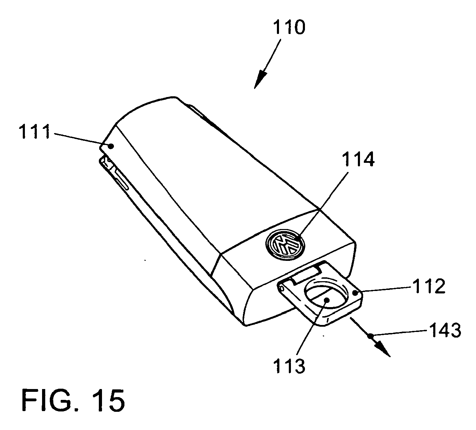

Fig. 15 zeigt ein weiteres Ausführungsbeispiel eines Schlüsselsystems 110 in einer zweiten Arretierposition in dreidimensionaler Darstellung. Das Schlüsselsystem 110 weist eine in einem Gehäuse 111 angeordnete Sendeelektronik zum berührungslosen Ver- und/oder Entriegeln einer Tür des Kraftfahrzeuges und/oder zum Betrieb des Kraftfahrzeuges sowie einen in einem Innenraum des Gehäuses 111 angeordneten Notschlüssel 112 zum mechanisch erfolgenden Ver- und/oder Entriegeln der Tür des Kraftfahrzeuges und/oder zum Betrieb des Kraftfahrzeuges auf. Das Gehäuse weist zudem eine Drucktaste 114 auf.

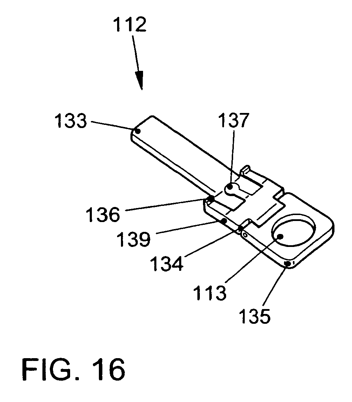

Der Notschlüssel 112 ist separat in Fig. 16 dargestellt. Der Notschlüssel 112 weist einen Schließkörper 136 und einen zur Aufnahme eines Schlüsselringes geeigneten Aufnahmekörper 135 mit einer kreisrunden Öffnung 113 auf. Der Schließkörper 136 weist ein Schließstück 133 zum mechanisch erfolgenden Ver- und/oder Entriegeln der Tür des Kraftfahrzeuges und/oder zum Betrieb des Kraftfahrzeuges und einen Haltekörper 139 auf, an dem das Schließstück 133 befestigt ist. Der Schließkörper 136 und der Aufnahmekörper 135 sind mittels eines Scharniers 134 kippbar miteinander verbunden. Der Schließkörper 136 weist zudem eine Einkerbung 137 auf.

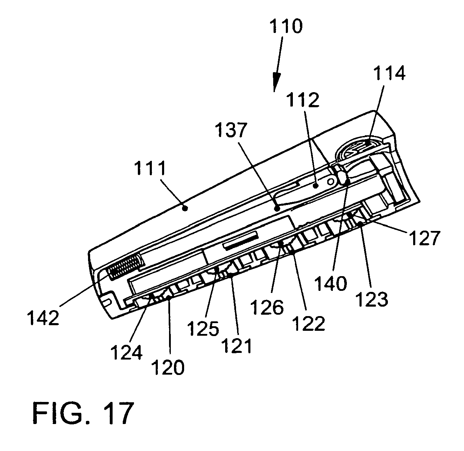

Fig. 17 zeigt einen Querschnitt des Schlüsselsystems 110 gemäß Fig. 15 in einer ersten Arretierposition in dreidimensionaler Darstellung. Das Schlüsselsystem 110 weist vier Schaltflächen 120, 121, 122 und 123 auf, unter denen Taster 124, 125, 126 und 127 angeordnet sind. Mittels des Tasters 127 sind die Türen des Kraftfahrzeuges entriegelbar. Mittels des Tasters 126 ist ein Kofferraum des Kraftfahrzeuges entriegelbar und zu öffnen. Mittels des Tasters 125 sind die Türen und der Kofferraum des Kraftfahrzeuges verriegelbar. Mittels des Tasters 124 kann das Kraftfahrzeug gestartet werden.

Die Drucktaste 114 ist mit einer Rastung 140 verbunden. In der in Fig. 15 dargestellten ersten Arretierposition rastet die Rastung 140 in der Öffnung 113 des Notschlüssel 112 und arretiert diesen. Wird die Drucktaste 114 heruntergedrückt, so wird auch die Rastung 140 nach unten und aus der Öffnung 113 gedrückt und gibt damit den Notschlüssel 112 frei. In diesem Zustand wird der Notschlüssel 112 durch ein federndes Element 142, das im vorliegenden Ausführungsbeispiel als Spiralfeder ausgebildet ist, aus den Gehäuse 111 gedrückt. Wird die Drucktaste 114 entlastet, kann die Rastung 140 in die Einkerbung 137 einrasten und den Notschlüssel 112 in der in Fig. 13 dargestellten zweiten Arretierposition arretieren.

Wird die Drucktaste 114 erneut heruntergedrückt, so wird auch die Rastung 140 nach unten und aus der Einkerbung 137 gedrückt und gibt damit den Notschlüssel 112 frei. In diesem Zustand kann der Notschlüssel 112 in Richtung des Pfeils 143 aus dem Gehäuse 111 gezogen werden.

### BEZUGSZEICHENLISTE

- 1, 60, 90, 110: Schlüsselsystem
- 2, 61, 91,111: Gehäuse
- 3, 20, 62, 92, 112: Notschlüssel
- 4: Schubelement
- 5, 25, 135: Aufnahmekörper
- 6, 26, 136: Schließkörper
- 7, 8, 27, 28, 63, 64, 137: Einkerbung
- 9, 29, 139: Haltekörper
- 10, 23, 133: Schließstück
- 11,21,113: Öffnung
- 12, 22,134: Scharnier
- 30, 93: Innenraum
- 40: mäanderförmiger Schaltbereich
- 41,42,43,44,120, 121, 122, 123: Schaltfläche
- 50: Arretierkörper
- 51: Arretierkugel
- 52: Arretierfeder
- 54, 70, 78, 79, 143: Pfeil
- 57: Aussparung
- 71 _: Druckstift
- 72: Stift
- 73: Arretierhebel
- 74: Arretierstift
- 75: Feder
- 94, 142: federndes Element
- 95: elastisches Element
- 96: Druckpunkt
- 97, 98: äußere Klemmen
- 99, 100: Rasthaken
- 101: Bereich
- 114: Drucktaste
- 124, 125, 126, 127: Taster
- 140: Rastung

## Patentansprüche

1. Schlüsselsystem (1, 60, 90, 110) für ein Kraftfahrzeug mit einer in einem Gehäuse (2, 61, 91, 111) angeordneten Sendeelektronik zum berührungslosen Ver- und/oder Entriegeln einer Tür des Kraftfahrzeuges und/oder zum Betrieb des Kraftfahrzeuges sowie mit einem Notschlüssel (3, 20, 62, 92, 112) zum mechanisch erfolgenden Ver- und/oder Entriegeln der Tür des Kraftfahrzeuges und/oder zum Betrieb des Kraftfahrzeuges, **dadurch gekennzeichnet, dass** der Notschlüssel (3, 20, 62, 92, 112) zumindest eine erste Einkerbung (7, 27, 63, 113) aufweist, mittels der der Notschlüssel (3, 20, 62, 92, 112) in einer ersten Rastposition in dem Gehäuse (2, 61, 91, 111) arretierbar ist, und eine zweite Einkerbung (8, 28, 64, 137) aufweist, mittels der der Notschlüssel (3, 20, 62, 92, 112) in einer von der ersten Rastposition verschiedenen zweiten Rastposition in dem Gehäuse (2, 61, 91, 111) arretierbar ist, wobei das Gehäuse (2, 61, 91, 111) einen sowohl mit der ersten Einkerbung (7, 27, 63, 113) als auch mit der zweiten Einkerbung (8, 28, 64, 137) des Notschlüssels (3, 20, 62, 92, 112) zusammenwirkenden Rastmechanismus zum Arretieren des Notschlüssels (3, 20, 62, 92, 112) in der ersten und in der zweiten Rastposition aufweist.

2. Schlüsselsystem (1, 60, 90, 110) nach Anspruch 1, **dadurch gekennzeichnet, dass** der Rastmechanismus eine Arretierkugel (51) aufweist, die zum Arretieren des Notschlüssels (3) in der ersten Rastposition in die erste Einkerbung (7) drückbar ist.

3. Schlüsselsystem (1, 60, 90, 110) nach Anspruch 2, **dadurch gekennzeichnet, dass** die Arretierkugel (51) zum Arretieren des Notschlüssels (3) in der zweiten Rastposition in die zweite Einkerbung (8) drückbar ist.

4. Schlüsselsystem (1, 60, 90, 110) nach Anspruch 1, **dadurch gekennzeichnet, dass** der Rastmechanismus einen Arretierstift (74) aufweist, der zum Arretieren des Notschlüssels (62) in der ersten Rastposition in die erste Einkerbung (63) drückbar ist.

5. Schlüsselsystem (1, 60, 90, 110) nach Anspruch 4, **dadurch gekennzeichnet, dass** der Arretierstift (74) zum Arretieren des Notschlüssels (62) in der zweiten Rastposition in die zweite Einkerbung (64) drückbar ist.

6. Schlüsselsystem (1, 60, 90, 110) nach Anspruch 1, **dadurch gekennzeichnet, dass** der Rastmechanismus einen Rasthaken (99, 100) aufweist, der zum Arretieren des Notschlüssels (62) in der ersten Rastposition in die erste Einkerbung drückbar ist.

7. Schlüsselsystem (1, 60, 90, 110) nach Anspruch 6, **dadurch gekennzeichnet, dass** der Rasthaken (99, 100) zum Arretieren des Notschlüssels (62) in der zweiten Rastposition in die zweite Einkerbung drückbar ist.

8. Schlüsselsystem (1, 60, 90, 110) nach Anspruch6 oder 7, **dadurch gekennzeichnet, dass** der Rastmechanismus ein elastisches Element (95) aufweist.

9. Schlüsselsystem (1, 60, 90, 110) nach Anspruch 8, **dadurch gekennzeichnet, dass** der Rasthaken (99, 100) durch Druck auf das elastische Element (95) aus der ersten Einkerbung drückbar ist

10. Schlüsselsystem (1, 60, 90, 110) nach Anspruch 8 oder 9, **dadurch gekennzeichnet, dass** der Rasthaken (99, 100) durch Druck auf das elastische Element (95) aus der zweiten Einkerbung drückbar ist.

11. Schlüsselsystem (1, 60, 90, 110) nach Anspruch 1, **dadurch gekennzeichnet, dass** der Rastmechanismus eine Rastung (140) aufweist, die zum Arretieren des Notschlüssels (3) in der ersten Rastposition in die erste Einkerbung drückbar ist, wobei die erste Einkerbung als Öffnung (113) zur Aufnahme eines Schlüsselringes ausgestaltet ist.

12. Schlüsselsystem (1, 60, 90, 110) nach Anspruch 11, **dadurch gekennzeichnet, dass** die Rastung (140) zum Arretieren des Notschlüssels (3) in der zweiten Rastposition in die zweite Einkerbung (137) drückbar ist.

13. Schlüsselsystem (1, 60, 90, 110) nach einem der vorhergehenden Ansprüche, **dadurch gekennzeichnet, dass** es zumindest ein federndes Element (94, 142) aufweist, mittels dessen der Notschlüssel (3, 20, 62, 92, 112) zumindest zum Teil aus dem Gehäuse (2, 61, 91, 111) schiebbar ist, wenn sich der Rastmechanismus in einer gelösten Stellung befindet.

14. Schlüsselsystem (1, 60, 90, 110) nach Anspruch 13, **dadurch gekennzeichnet, dass** der Notschlüssel (3, 20, 62, 92, 112) mittels des federnden Elementes (94, 142) von der ersten Rastposition in die zweite Rastposition schiebbar ist, wenn sich der Rastmechanismus in einer gelösten Stellung befindet.

15. Schlüsselsystem (1, 60, 90, 110) für ein Kraftfahrzeug mit einer in einem Gehäuse (2, 61, 91, 111) angeordneten Sendeelektronik zum berührungslosen Ver- und/oder Entriegeln einer Tür des Kraftfahrzeuges und/oder zum Betrieb des Kraftfahrzeuges sowie mit einem Notschlüssel (3, 20, 62, 92, 112) zum mechanisch erfolgenden Ver- und/oder Entriegeln der Tür des Kraftfahrzeuges und/oder zum Betrieb des Kraftfahrzeuges, **dadurch gekennzeichnet, dass** das Gehäuse (2, 61, 91, 111) einen Rastmechanismus zum Arretieren des Notschlüssels (3, 20, 62, 92, 112) in einer ersten Rastposition und in einer von der ersten Rastposition verschiedenen zweiten Rastposition sowie ein federndes Element (94, 142) aufweist, mittels dessen der Notschlüssel (3, 20, 62, 92, 112) von der ersten Rastposition in die zweite Rastposition schiebbar ist, wenn sich der Rastmechanismus in einer gelösten Stellung befindet.

16. Schlüsselsystem (1, 60, 90, 110) nach einem der Ansprüche 13 bis 15, **dadurch gekennzeichnet, dass** das federnde Element (94, 142) eine Spiralfeder ist.

17. Schlüsselsystem (1, 60, 90, 110) nach einem der Ansprüche 13 bis 16, **dadurch gekennzeichnet, dass** das federnde Element (94, 142) Kunststoff aufweist.

18. Schlüsselsystem (1, 60, 90, 110) nach einem der Ansprüche 13 bis 17, **dadurch gekennzeichnet, dass** das federnde Element (94, 142) in dem Gehäuse (2, 61, 91, 111) angeordnet ist.

19. Schlüsselsystem (1, 60, 90, 110) nach einem der Ansprüche 13 bis 18, **dadurch gekennzeichnet, dass** das federnde Element (94, 142) durch Einschieben des Notschlüssels in das Gehäuse (2, 61, 91, 111) spannbar ist.

## Claims

1. Key system (1, 60, 90, 110) for a motor vehicle having an electronic transmit circuit arranged in a casing (2, 61, 91, 111) for locking and/or unlocking a door of the motor vehicle without contact and/or for operating the motor vehicle, and having an emergency key (3, 20, 62, 92, 112) for mechanically locking and/or unlocking the door of the motor vehicle and/or for operating the motor vehicle, **characterized in that** the emergency key (3, 20, 62, 92, 112) comprises at least one first indentation (7, 27, 63, 113) by means of which the emergency key (3, 20, 62, 92, 112) can be retained in a first latching position in the casing (2, 61, 91, 111), and comprises a second indentation (8, 28, 64, 137) by means of which the emergency key (3, 20, 62, 92, 112) can be retained in a second latching position in the casing (2, 61, 91, 111) that differs from the first latching position, where the casing (2, 61, 91, 111) comprises a latching mechanism that interacts both with the first indentation (7, 27, 63, 113) and with the second indentation (8, 28, 64, 137) of the emergency key (3, 20, 62, 92, 112) in order to retain the emergency key (3, 20, 62, 92, 112) in the first and in the second latching position.

2. Key system (1, 60, 90, 110) according to Claim 1, **characterized in that** the latching mechanism comprises a retaining ball (51), which can be pressed into the first indentation (7) in order to retain the emergency key (3) in the first latching position.

3. Key system (1, 60, 90, 110) according to Claim 2, **characterized in that** the retaining ball (51) can be pressed into the second indentation (8) in order to retain the emergency key (3) in the second latching position.

4. Key system (1, 60, 90, 110) according to Claim 1, **characterized in that** the latching mechanism comprises a retaining pin (74), which can be pressed into the first indentation (63) in order to retain the emergency key (62) in the first latching position.

5. Key system (1, 60, 90, 110) according to Claim 4, **characterized in that** the retaining pin (74) can be pressed into the second indentation (64) in order to retain the emergency key (62) in the second latching position.

6. Key system (1, 60, 90, 110) according to Claim 1, **characterized in that** the latching mechanism comprises a latching hook (99, 100), which can be pressed into the first indentation in order to retain the emergency key (62) in the first latching position.

7. Key system (1, 60, 90, 110) according to Claim 6, **characterized in that** the latching hook (99, 100) can be pressed into the second indentation in order to retain the emergency key (62) in the second latching position

8. Key system (1, 60, 90, 110) according to Claim 6 or 7, **characterized in that** the latching mechanism comprises an elastic element (95).

9. Key system (1, 60, 90, 110) according to Claim 8, **characterized in that** the latching hook (99, 100) can be pressed out of the first indentation by pressure on the elastic element (95).

10. Key system (1, 60, 90, 110) according to Claim 8 or 9, **characterized in that** the latching hook (99, 100) can be pressed out of the second indentation \ by pressure on the elastic element (95).

11. Key system (1, 60, 90, 110) according to Claim 1, **characterized in that** the latching mechanism comprises a catch (140), which can be pressed into the first indentation in order to retain the emergency key (3) in the first latching position, where the first indentation is formed as a hole (113) to accommodate a key ring.

12. Key system (1, 60, 90, 110) according to Claim 11, **characterized in that** the catch (140) can be pressed into the second indentation (137) in order to retain the emergency key (3) in the second latching position.

13. Key system (1, 60, 90, 110) according to one of the preceding claims, **characterized in that** it comprises at least one spring element (94, 142), by means of which the emergency key (3, 20, 62, 92, 112) can be pushed at least partially out of the casing (2, 61, 91, 111) when the latching mechanism is in a released position.

14. Key system (1, 60, 90, 110) according to Claim 13, **characterized in that** the emergency key (3, 20, 62, 92, 112) can be pushed by means of the spring element (94, 142) from the first latching position into the second latching position when the latching mechanism is in a released position.

15. Key system (1, 60, 90, 110) for a motor vehicle having an electronic transmit circuit arranged in a casing (2, 61, 91, 111) for locking and/or unlocking a door of the motor vehicle without contact and/or for operating the motor vehicle, and having an emergency key (3, 20, 62, 92, 112) for mechanically locking and/or unlocking the door of the motor vehicle and/or for operating the motor vehicle, **characterized in that** the casing (2, 61, 91, 111) comprises a latching mechanism for retaining the emergency key (3, 20, 62, 92, 112) in a first latching position and in a second latching position that differs from the first latching position, and a spring element (94, 142), by means of which the emergency key (3, 20, 62, 92, 112) can be pushed from the first latching position into the second latching position when the latching mechanism is in a released position.

16. Key system (1, 60, 90, 110) according to one of Claims 13 to 15, **characterized in that** the spring element (94, 142) is a helical spring.

17. Key system (1, 60, 90, 110) according to one of Claims 13 to 16, **characterized in that** the spring element (94, 142) comprises plastic.

18. Key system (1, 60, 90, 110) according to one of Claims 13 to 17, **characterized in that** the spring element (94, 142) is arranged in the casing (2, 61, 91, 111).

19. Key system (1, 60, 90, 110) according to one of Claims 13 to 18, **characterized in that** the spring element (94, 142) can be tensed by pushing the emergency key into the casing (2, 61, 91, 111).

## Revendications

1. Système de clef (1, 60, 90, 110) pour un véhicule automobile comportant une électronique d'émission disposée dans un boîtier (2, 61, 91, 111) destinée à verrouiller et/ou déverrouiller sans contact une portière du véhicule automobile et/ou à mettre en marche le véhicule automobile ainsi qu'une clef de secours (3, 20, 62, 92, 112) destinée à verrouiller et/ou déverrouiller de façon mécanique la portière du véhicule automobile et/ou à mettre en marche le véhicule automobile, **caractérisé en ce que** la clef de secours (3, 20, 62, 92, 112) présente au moins un premier cran (7, 27, 63, 113), au moyen duquel la clef de secours (3, 20, 62, 92, 112) peut être arrêtée dans une première position d'encliquetage dans le boîtier (2, 61, 91, 111), et un second cran (8, 28, 64, 137), au moyen duquel la clef de secours (3, 20, 62, 92, 112) peut être arrêtée dans une seconde position d'encliquetage dans le boîtier (2, 61, 91, 111) différente de la première position d'encliquetage, le boîtier (2, 61, 91, 111) présentant un mécanisme d'encliquetage coopérant non seulement avec le premier cran (7, 27, 63, 113) mais aussi avec le second cran (8, 28, 64, 137) de la clef de secours (3, 20, 62, 92, 112) destiné à arrêter la clef de secours (3, 20, 62, 92, 112) dans la première et dans la seconde position d'encliquetage.

2. Système de clef (1, 60, 90, 110) selon la revendication 1, **caractérisé en ce que** le mécanisme d'encliquetage présente une bille d'arrêt (51), laquelle peut être poussée dans le premier cran (7) en vue d'arrêter la clef de secours (3) dans la première position d'encliquetage.

3. Système de clef (1, 60, 90, 110) selon la revendication 2, **caractérisé en ce que** la bille d'arrêt (51) peut être poussée dans le second cran (8) en vue d'arrêter la clef de secours (3) dans la seconde position d'encliquetage.

4. Système de clef (1, 60, 90, 110) selon la revendication 1, **caractérisé en ce que** le mécanisme d'encliquetage présente une broche d'arrêt (74), laquelle peut être poussée dans le premier cran (63) en vue d'arrêter la clef de secours (62) dans la première position d'encliquetage.

5. Système de clef (1, 60, 90, 110) selon la revendication 4, **caractérisé en ce que** la broche d'arrêt (74) peut être poussée dans le second cran (64) en vue d'arrêter la clef de secours (62) dans la seconde position d'encliquetage.

6. Système de clef (1, 60, 90, 110) selon la revendication 1, **caractérisé en ce que** le mécanisme d'encliquetage présente un crochet d'encliquetage (99, 100), lequel peut être poussé dans le premier cran en vue d'arrêter la clef de secours (62) dans la première position d'encliquetage.

7. Système de clef (1, 60, 90, 110) selon la revendication 6, **caractérisé en ce que** le crochet d'encliquetage (99, 100) peut être poussé dans le second cran en vue d'arrêter la clef de secours (62) dans la seconde position d'encliquetage.

8. Système de clef (1, 60, 90, 110) selon la revendication 6 ou 7, **caractérisé en ce que** le mécanisme d'encliquetage présente un élément élastique (95).

9. Système de clef (1, 60, 90, 110) selon la revendication 8, **caractérisé en ce que** le crochet d'encliquetage (99, 100) peut être poussé hors du premier cran par une pression sur l'élément élastique (95).

10. Système de clef (1, 60, 90, 110) selon la revendication 8 ou 9, **caractérisé en ce que** le crochet d'encliquetage (99, 100) peut être poussé hors du second cran par une pression sur l'élément élastique (95).

11. Système de clef (1, 60, 90, 110) selon la revendication 1, **caractérisé en ce que** le mécanisme d'encliquetage présente un cliquet (140), lequel peut être poussé dans le premier cran en vue d'arrêter la clef de secours (3) dans la première position d'encliquetage, le premier cran étant conformé en tant qu'ouverture (113) destinée à recevoir un anneau de porte-clefs.

12. Système de clef (1, 60, 90, 110) selon la revendication 11, **caractérisé en ce que** le cliquet (140) peut être poussé dans le second cran (137) en vue d'arrêter la clef de secours (3) dans la seconde position d'encliquetage.

13. Système de clef (1, 60, 90, 110) selon l'une quelconque des revendications précédentes, **caractérisé en ce qu'**il présente au moins un élément ressort (94, 142), au moyen duquel la clef de secours (3, 20, 62, 92, 112) peut être poussée au moins partiellement hors du boîtier (2, 61, 91, 111) lorsque le mécanisme d'encliquetage se trouve dans une position libérée.

14. Système de clef (1, 60, 90, 110) selon la revendication 13, **caractérisé en ce que** la clef de secours (3, 20, 62, 92, 112) peut être poussée au moyen de l'élément ressort (94, 142) de la première position d'encliquetage dans la seconde position d'encliquetage lorsque le mécanisme d'encliquetage se trouve dans une position libérée.

15. Système de clef (1, 60, 90, 110) pour un véhicule automobile comportant une électronique d'émission disposée dans un boîtier (2, 61, 91, 111) destinée à verrouiller et/ou déverrouiller sans contact une portière du véhicule automobile et/ou à mettre en marche le véhicule automobile ainsi qu'une clef de secours (3, 20, 62, 92, 112) destinée à verrouiller et/ou déverrouiller de façon mécanique la portière du véhicule automobile et/ou à mettre en marche le véhicule automobile, **caractérisé en ce que** le boîtier (2, 61, 91, 111) présente un mécanisme d'encliquetage destiné à arrêter la clef de secours (3, 20, 62, 92, 112) dans une première position d'encliquetage et dans une seconde position d'encliquetage différente de la première position d'encliquetage ainsi qu'un élément ressort (94, 142), au moyen duquel la clef de secours (3, 20, 62, 92, 112) peut être poussée de la première position d'encliquetage dans la seconde position d'encliquetage lorsque le mécanisme d'encliquetage se trouve dans une position libérée.

16. Système de clef (1, 60, 90, 110) selon l'une quelconque des revendications 13 à 15, **caractérisé en ce que** l'élément ressort (94, 142) est un ressort hélicoïdal.

17. Système de clef (1, 60, 90, 110) selon l'une quelconque des revendications 13 à 16, **caractérisé en ce que** l'élément ressort (94, 142) est en matière synthétique.

18. Système de clef (1, 60, 90, 110) selon l'une quelconque des revendications 13 à 17, **caractérisé en ce que** l'élément ressort (94, 142) est disposé dans le boîtier (2, 61, 91, 111).

19. Système de clef (1, 60, 90, 110) selon l'une quelconque des revendications 13 à 18, **caractérisé en ce que** l'élément ressort (94, 142) peut être mis sous contrainte par l'introduction de la clef de secours dans le boîtier (2, 61, 91, 111).
